# EUROPEAN PATENT APPLICATION

(11) **EP 1 988 308 A2**
(43) Date of publication of application: **05.11.2008**
(21) Application number: 08251603.0
(22) Date of filing: 02.05.2008
(51) Int. Cl.: F16H 19/00

(54) **Actuator**

(30) Priority: 04.05.2007 GB 0708641
(71) Applicant: Goodrich Actuation Systems Ltd., Solihull West Midlands B90 4LA (GB)
(72) Inventor: Hubberstey, Mark, Wolverhampton WV9 5QH (GB); Murray, Peter Ian, Wolverhampton WV8 1PG (GB)
(74) Representative: Bailey, Richard Alan

(57) **Abstract**

An actuator comprises a rack (14) arranged to be driven for movement by a rotatable pinion (16) the rack (14) having at least a first region (22) having a first pitch circle diameter and a second region (26) having a second, different, pitch circle diameter, and movable support means (34, 36, 40) for supporting the rack (14) for movement.

## Description

This invention relates to an actuator, and in particular to an actuator suitable for use in driving a flight control surface of an aircraft between extended and retracted positions.

The flight control surfaces, for example leading edge slats, of an aircraft wing are typically driven between retracted and extended positions using a rack and pinion type actuator. The actuator comprises a rotatable pinion supported and driven for rotation, in use, by an appropriate motor and gearbox arrangement. The pinion has gear teeth arranged to mesh with corresponding teeth formed on a rack. The rack is typically of shallow arcuate form and is supported for translating movement upon rollers or other guide means. The rack is typically of a uniform radius of curvature and is supported for movement about the centre of curvature thereof Typically, the rack is of two-part construction comprising a toothed portion driven by the pinion and fixed to a supporting track supported by the rollers.

The rack carries the flight control surface. It will be appreciated, therefore, that the path of movement of the flight control surface is the same as that of the rack.

It is desirable to be able to drive a flight control surface over a path of movement of more complex shape than a simple, relatively shallow arc of fixed radius of curvature, for example so as to allow the angle of attack of the flight control surface to be varied as the flight control surface approaches its fully extended position. Such complex paths of movement are not achievable using the typical arrangement described hereinbefore. It is an object of the invention to provide an actuator in which more complex paths of movement are attainable.

According to the present invention there is provided an actuator comprising a rack arranged to be driven for movement by a rotatable pinion, the rack having at least a first region having a pitch circle diameter centred on a first point, a second region having a pitch circle diameter centred on a second, different point, and movable support means for supporting the rack for movement.

The first and second regions are preferably of different pitch circle diameters.

The first and second points are conveniently located on opposite sides of the rack.

By providing a rack having at least two regions of different pitch circle diameter and/or regions having pitch circle diameters centred upon different points, it will be appreciated that a relatively complex path of movement of the rack, and of a flight control surface carried by the rack, can be attained.

The moveable support means conveniently includes an upper support and a lower support, preferably in the form of rollers, the positions of which are moveable to accommodate the relatively complex movement of the rack. Preferably the axes of rotation of the upper and lower rollers are moveable so as to maintain the axes of rotation in positions such that a notional line interconnecting the axes of rotation is substantially radial to the part of the rack in engagement with the rollers at any given time.

The upper and lower rollers are conveniently mounted upon a carriage pivotally supported about a pivot axis located substantially midway between the axes of rotation of the upper and lower rollers.

The support means conveniently further comprises a second upper support, for example in the form of a roller the axis of rotation of which is moveable about the axis of rotation of the pinion such that, in use, the second upper roller can move to maintain the axis of rotation thereof in a position such that a notional line interconnecting the axes of rotation of the second upper roller and the pinion is substantially radial to the part of the rack in engagement with the second upper roller. A second lower roller whose axis of rotation is coaxial with that of the pinion is also preferably provided.

The provision of such moveable support means is advantageous in that it permits the rack to be supported for movement along a relatively complex path of movement.

Although reference is made hereinbefore to the rack having first and second regions of different pitch circle diameters, it will be appreciated that the rack may additionally include further regions.

The invention will further be described, by way of example, with reference to the accompanying drawings, in which:
Figure 1 illustrates an actuator in accordance with an embodiment of the invention in a retracted position;
Figure 2 is a view similar to Figure 1 illustrating the actuator in a partially extended position;
Figure 3 illustrates, diagrammatically, the actuator in several positions;
Figures 4 and 5 are perspective views of the actuator; and
Figure 6 illustrates the rack profile of the actuator.

Referring to the accompanying drawings there is illustrated an actuator 10 for use in driving a flight control surface in the form of a leading edge slat 12 of an aircraft's wing between retracted and extended positions. The actuator 10 comprises an elongate toothed rack 14 arranged to be driven for movement by a toothed pinion 16, the teeth of which mesh with corresponding teeth of the rack 14. The pinion 16 is supported for rotation by appropriate bearings and is arranged to be driven by an associated motor 18 through a suitable gear arrangement.

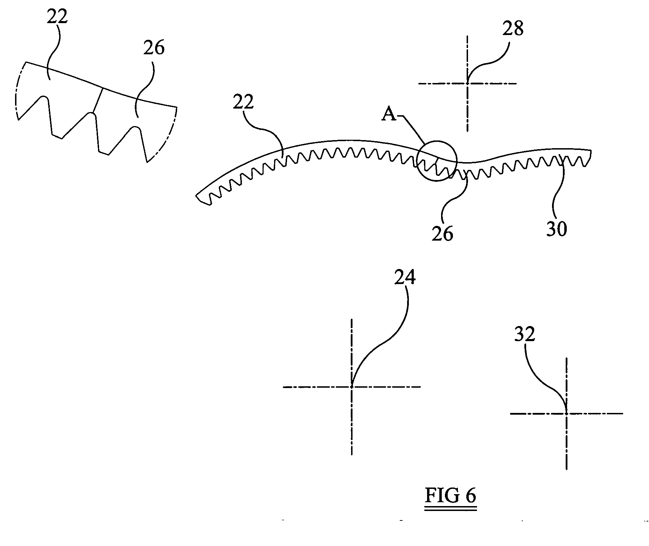

The rack 14, unlike typical arrangements, is not of a uniform radius of curvature or pitch circle diameter, but rather has a first region 22 having a first pitch circle diameter centred on point 24, a second region 26 having a second pitch circle diameter centred on point 28 and a third region 30 having a third pitch circle diameter centred on point 32. Although the rack 14 has three identifiable regions, it will be appreciated that other embodiments are possible having just two such regions or more than three such regions. The regions 22, 26, 30 are formed integrally with one another and, as shown in Figure 6, there is a smooth transition between the teeth of each region and the teeth of the adjacent regions so no meshing problems are encountered as the teeth of the pinion 16 move into engagement with the teeth of the various regions. Although the regions 22, 26, 30 are formed integrally with one another, it may be possible to form them as separate integers which, in use, are rigidly connected to one another.

The slat 12 is rigidly connected to the rack 14 so as to be moveable therewith. The precise nature of the mounting of the slat 12 to the rack 14 falls outside of the scope of the invention and so is hot illustrated or described herein in detail.

The rack 14 is supported and guided for movement by a moveable support means 34 comprising first upper and lower rollers 36, 38 and second upper and lower rollers 40 42. The pinion 16 may further serve to support the rack 14.

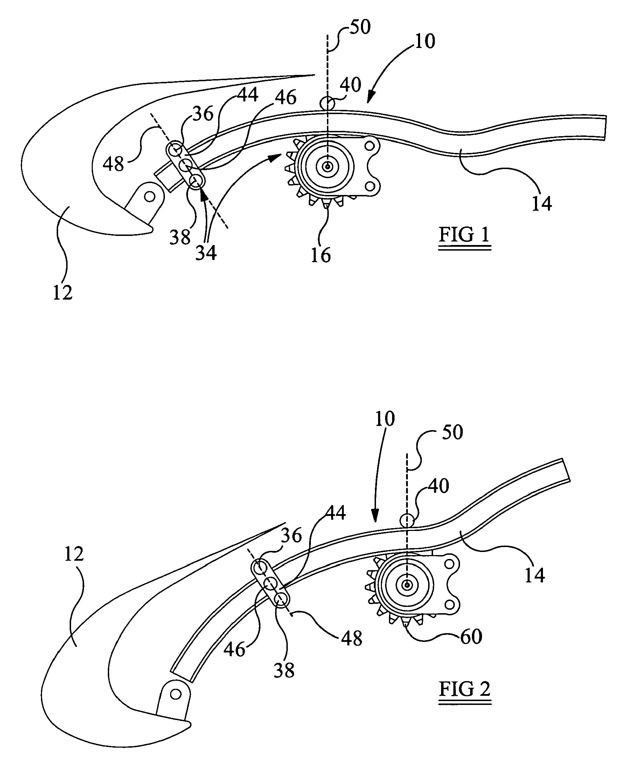

The first upper and lower rollers 36, 38 are supported for rotation relative to a carriage 44 which, itself, is pivotally mounted by a pivot shaft 46 upon part of the wing structure such that the pivot axis of carriage 44 is fixed relative to the wing and the axis of rotation of the pinion 16. The pivot shaft 46 is located midway between the axes of rotation of the upper and lower rollers 36, 38 relative to the carriage 44, the pivot shaft 46 lying adjacent the centreline of the rack 14 when viewed from the side as in Figures 1 and 2. The rack 14 passes between and is supported by the upper and lower rollers 36, 38. The pivotal mounting of the carriage 44 is such that the carriage 44 can move, in use, to maintain a line 48 interconnecting the axes of rotation of the upper and lower rollers 36, 38 such that it always lies substantially radially to the adjacent part of the rack 14 engaged by and supported by the upper and lower rollers 36, 38 at any given time.

The second upper roller 40 is rotatably mounted upon a carriage (not shown) which is pivotable about the axis of rotation of the pinion 16, the second lower roller 42 being of relatively large diameter and mounted adjacent the pinion 16 so as to rotate therewith. The rack 14 passes between the second upper and lower rollers 40, 42 such that the rack 14 is guided and supported for movement thereby. The pivotal mounting of the carriage allows the axis of rotation of the second upper roller 40 to move so that, in use, a line 50 interconnecting the axes of rotation of the second upper roller 40 and the pinion 16/lower roller 42 is substantially radial to the part of the rack 14 engaging the second upper roller 40 at all times.

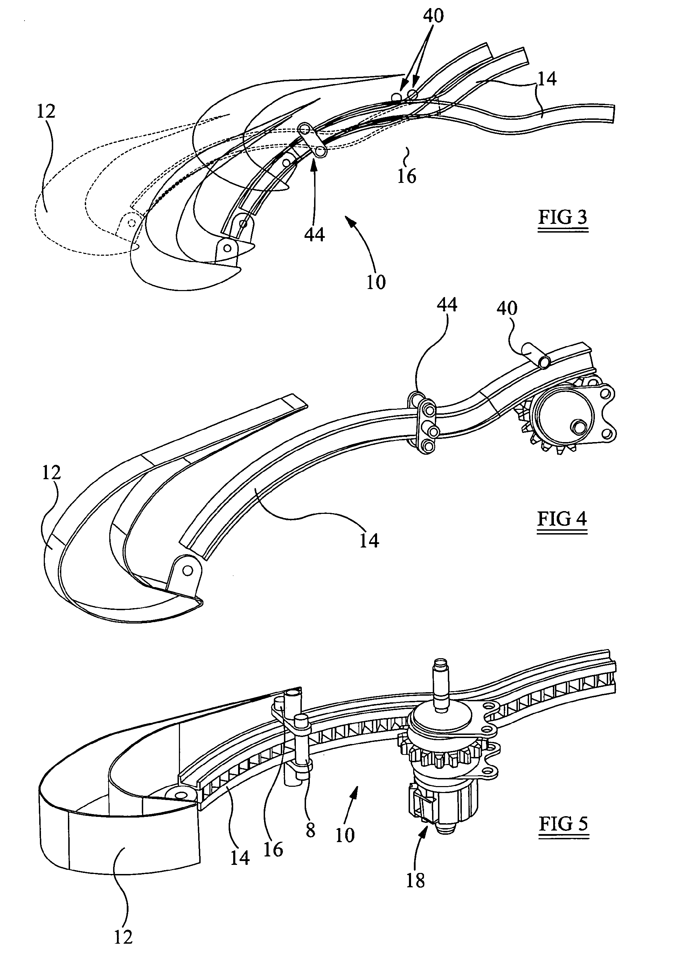

In use, to move the slat 12 from its retracted position towards its extended position, the pinion 16 is rotated and the meshing between the teeth of the pinion 16 and those of the rack 14 ensures that drive is transmitted to the rack 14 causing the rack 14 to move. Movement of the rack 14 is guided by the support means 34. Initially, both the first upper and lower rollers 36, 38 and the second upper and lower rollers 40, 42 cooperate with the first region 22 of the rack 14, thus initially the rack 14 will translate along an arcuate path of movement about point 24. After a predetermined amount of movement has occurred, the second upper and lower rollers 40, 42 will cooperate with the second region 26 of the rack 14, at which point the movement of the rack 14 will become more complex, being governed by the shapes of both the first and second regions 22, 26 with which the support means 34 is cooperating. The complex movement will continue until the rack 14 reaches its fully extended position, there being no other point at which both set of rollers 36, 38, 40, 42 cooperate with the same region of the rack 14 in this embodiment. It will be appreciated that this need not always be the case. In order to accommodate the more complex movement, the carriage associated with the second upper roller 40 and that associated with the first upper and lower rollers 36, 38 move, adjusting the positions of the axes of rotation of the first upper and lower rollers 36, 38 and the second upper roller 40 to ensure that the notional lines 48, 50 remain radial to the parts of the rack 14 engaging the respective rollers 36, 38, 40. The movement of the carriages and axes of rotation of the rollers 36, 38, 40 is apparent in Figure 3.

Return movement of the slat 12 is achieved by driving the pinion 16 in the reverse direction. The path of movement of the slat 12 will be the same as when the slat 12 is being driven towards its fully extended position.

As illustrated in Figure 3, in the arrangement illustrated the slat 12 moves, initially, along a generally arcuate path, lowering and steepening the angle of attack of the slat 12. Subsequently, as the slat 12 approaches its fully extended position, the slat 12 lifts and its angle of attack is reduced. Although the drawings illustrate a particular path of movement for the slat 12, it will be appreciated that by appropriate design of the rack 14, a number of other paths of slat movement are possible.

A wide range of modifications and alterations may be made to the arrangement described hereinbefore without departing from the scope of the invention. Further, although the invention is described in relation to an actuator for use in moving a leading edge slat of a wing, it will be appreciated that the invention may be used in other applications.

## Claims

1. An actuator comprising a rack (14) arranged to be driven for movement by a rotatable pinion (16), the rack (14) having at least a first region (22) having a pitch circle diameter centred on a first point (24), a second region (26) having a pitch circle diameter centred on a second, different point (28), and movable support means (34, 36, 40) for supporting the rack (14) for movement.

2. An actuator according to Claim 1, wherein the first and second regions (22, 26) are of different pitch circle diameters.

3. An actuator according to Claim 1 or Claim 2, wherein the first and second points (24, 28) are located on opposite sides of the rack (14).

4. An actuator according to any of the preceding claims, wherein the movable support means (34, 36, 40) includes an upper support (36) and a lower support (38) the positions of which are movable to accommodate the relatively complex movement of the rack (14).

5. An actuator according to Claim 4, wherein the upper and lower supports comprise rollers (34, 36).

6. An actuator according to Claim 5, wherein the axes of rotation of the upper and lower rollers (34, 36) are movable so as to maintain the axes of rotation in positions such that a notional line (48) interconnecting the axes of rotation is substantially radial to the part of the rack (14) in engagement with the rollers (34, 36) at any given time.

7. An actuator according to Claim 5 or Claim 6, wherein the upper and lower rollers (34, 36) are mounted upon a carriage (44) pivotally supported about a pivot axis (46) located substantially midway between the axes of rotation of the upper and lower rollers (34, 36).

8. An actuator according to any of Claims 1 to 7, wherein the support means further comprises a second upper support (40).

9. An actuator according to Claim 8, wherein the second upper support comprises a second upper roller the axis of rotation of which is movable about the axis of rotation of the pinion such that, in use, the second upper roller (40) can move to maintain the axis of rotation thereof in a position such that a notional line (50) interconnecting the axes of rotation of the second upper roller (40) and the pinion (16) is substantially radial to the part of the rack (14) in engagement with the second upper roller (40).

10. An actuator according to Claim 9, further comprising a second lower roller (42) whose axis of rotation is coaxial with that of the pinion (16).

11. An actuator according to any of the preceding claims, wherein the rack (14) further includes at least one further region (30).
